# EUROPEAN PATENT SPECIFICATION

(11) **EP 1 517 119 B1**
(45) Date of publication and mention of the grant of the patent: **09.04.2008**
(21) Application number: 03405694.5
(22) Date of filing: 22.09.2003
(51) Int. Cl.: G01D 5/347, F15B 15/28

(54) **Optical device for determining the longitudinal and angular position of a rotationally symmetrical apparatus**
Optische Vorrichtung zur Bestimmung der longitudinalen Position und des Drehwinkels eines rotationssymmetrischen Körpers
Dispositif optique de mesure des positions angulaires et longitudinales d'un corps à symétrie de rotation

(43) Date of publication of application: 23.03.2005
(73) Proprietor: Xitact S.A., 1110 Morges (CH)
(72) Inventor: Vecerina, Ivan, 1010 Lausanne (CH); Bétrisey, Stéphane, 1110 Morges (CH); Zoethout, Jurjen, 1530 Payern (CH)
(74) Representative: Richard, François-Régis

(56) References cited:
- DE-A- 10 203 794
- US-A- 4 103 155
- US-A- 4 277 168
- US-A- 5 233 407
- US-A1- 2002 053 903
- PATENT ABSTRACTS OF JAPAN vol. 011, no. 134 (P-571), 28 April 1987 (1987-04-28) & JP 61 274219 A (MATSUSHITA ELECTRIC IND CO LTD), 4 December 1986 (1986-12-04)
- PATENT ABSTRACTS OF JAPAN vol. 009, no. 224 (P-387), 10 September 1985 (1985-09-10) & JP 60 082807 A (KAWAGUCHIKO SEIMITSU KK), 11 May 1985 (1985-05-11)

## Description

### Field of the invention

The present invention relates to a device, for determining the longitudinal and angular position of a rotationally symmetrical apparatus, used in a system for conducting simulated or real surgical operations and, especially comprising an optical navigation sensor tracking the motion of the surface of an instrument as it passes through a static element that surrounds it, such as a trocar, a needle or a vessel.

### Background of the invention

Surgery simulators, as well computer assisted surgery systems and other applications, require that the position of instruments manipulated by users be continuously tracked. In minimally invasive surgical procedures, where it is common that instruments pass through an insertion port, such as a trocar or needle, it is common that the motion of an instrument relative to that insertion port needs to be continuously measured and defined, or "tracked".

This tracking typically requires two types of information: (1) the continuous and precise measurement of the motion of an inserted instrument, and (2) a means to establish the absolute position of the instrument. The need for the latter arises from the fact that many motion-tracking systems only provide displacement information relative to a previous position, so a known reference position from which the displacements are measured needs to be established. Such an initial reference position can be established by requesting that the user places the system in a defined state upon system power-up, or upon request from the system. Furthermore, several motion measurements systems accumulate a measurement error, so periodic identification of a reference position may be required.

In WO 02/71369, the applicant has presented an approach to periodically establish the absolute position of an instrument and compensate for accumulated errors. WO 02/71369 uses an altered magnetic flux to conduct a precise position and angular measurement without considerable slippage occurring when guiding a rotationally symmetrical body that is guided inside a suspension device surrounding the same. The rotationally symmetrical body forms a portion of the simulated surgical instrument, and the suspension device forms a simulated trocar. An element causing an altered magnetic flux disposes of a locally varying distribution in the longitudinal direction and/or in the peripheral direction to enable said precise position and angular measurement.

Prior art discloses devices for tracking the relative motion of instruments, catheters, or other elongated instruments using a mechanical system that is in contact with the moving instrument. Some systems use tracking wheels or a similar mechanism directly driven by cables or gears attached to the moving instrument. This allows a reliable measurement of the instrument's motion, but typically demands that the moving instrument be attached to the tracking device, preventing users from easily and completely withdrawing the instrument. While such systems provide a reliable measurement of the instrument's motion, potentially without any accumulated error, the need to establish a reference position is typically present.

US 6,323,837 discloses another contact-free measurement method for tracking the angular position of a rod used within the simulation of surgical operations. The device according to said document uses black coded transparent wheels with optical encoders as transducers to sense said angular position.

Another approach is to use a tight grid-like or striped marking of the instrument's surface. This approach is described in WO 98/10387. This approach allows a contact-free reading of the motion of the instrument, but can only track specially designed surfaces. The tracked surface must, in its entirety, be covered with a tight striped or grid-like pattern to allow motion detection. This increases manufacturing costs, and limits the type of instruments and surfaces that can be tracked. The surface coating also needs to be protected, as stains or scratches are likely to interfere with the tracking. The resolution that can be obtained with such a system is also limited. The prior art analysis in patent US 6,256,016 describes in detail several inconveniences of this technology. This approach may not be affected by measurement error accumulation, but still requires a means to establish an initial reference position.

Optical tracking devices based on image capture and analysis, so called optical navigation sensors, have been introduced more recently. They are mainly used to improve the reliability and performance of computer mice (US 5,578,813, US 5,644,139, US 6,256,016, US 6,281,882). Unlike previous technologies which required a specific treatment or fabrication of the underlying surface (US 4,409,479), these optical navigation sensors capture consecutive images of a moving surface, and matching each newly acquired image with translated copies of previous images. This allows the sensors to analyze and precisely measure the motion of a nearby surface without requiring any physical contact, and allowing almost any type of surface to be tracked.

These sensors are used to measure the displacement of devices along two orthogonal linear axes in a flat plane, in particular within computer mice. The use of these sensors in specific configurations have also been disclosed, for example to track the motion of a user's finger along 2 orthogonal axes (US 6,057,540), as part of surface image scanning devices (US 5,994,710), or within bar-code reading instruments (US 6,585,158).

The need remains, however, for smaller devices conducting a precise position and angular measurement of a rotationally symmetrical instrument without slippage to permit the use of e.g. three simulated instruments within the confined space of the simulated surgical area.

Another object is to describe how information that is obtained from the processing of images captured by the optical navigation sensor can be used as a means to establish the absolute longitudinal and rotational position of the instrument, by detecting the presence or absence of an instrument within the tracking device, and by detecting optical marks on the surface of the instrument. Additionally, the detection of surface markers allows the identification of the instrument. A further object of the invention is therefore to provide the possibility to readily recognize the presence of a simulated instrument and/or to determine the kind of the present simulated instrument and/or its absolute/reference position within the tracking device.

### Summary of the invention

The present invention relates on the insight that optical navigation sensors which are used in so-called optical mice for flat surfaces can be applied to tracking the motion of a rotationally symmetrical instrument to accurately determine its longitudinal and angular position - by measuring the motion of the instrument, and providing a means of establishing its absolute position.

The set object is met in accordance with the invention by means of a device in accordance with the wording of claim 1 using an optical navigation sensor to track the longitudinal motion and the rotation around a longitudinal axis of a rotationally symmetrical instrument.

The features according to claim 1 allow a direct, contact-free detection of the insertion of an instrument used for simulating surgical operations within a longitudinal element, as well as a determination of the relative positions of the instrument and the longitudinal element. The rotation and translation of the instrument can therefore be tracked and computed without contact and the measuring technique does not require any specific treatment of the instrument's surface.

Further preferred embodiments of the apparatus according to the invention are characterized in the dependent claims.

An apparatus for interfacing the movement of a shaft with a computer includes a support having two degrees-of-freedom and an optical navigation sensor attached to it. When a shaft is engaged with the support, it can move with two degrees of freedom, where the optical navigation sensor senses each degree of freedom. The optical navigation sensor provides a direct, contact-free and simultaneous tracking of the combined translational and rotational displacement of the object. Especially for force feedback related applications, a direct and contact-free position determination of the device is preferable.

The invention enhances the tracking of rotationally symmetrical instruments that move through a surrounding structure - which may be a dedicated insertion port such as a trocar, or another instrument-holding piece that is used as a reference for position measurements, e.g. a vessel or a needle.

A benefit of the device according to the invention is that a flexible or rigid instrument, as well as any other device, or the finger of a user, can be inserted in the tracking device, which can record its longitudinal translation and rotational motion. No special preparation of the instrument, and no dedicated surface are required.

In another embodiment of the invention, the rotationally symmetrical instrument itself carries the optical navigation sensor. This allows the longitudinal and rotational motion of the instrument, which then integrates an optical navigation sensor, to be tracked relative to its surroundings, which can be a tube of a corresponding diameter, or any material or tissue that is penetrated and separated by the instrument itself.

The present invention further relates to a method of implementation of an apparatus as described above during a surgical simulation, the method being not carried out on any part of a human body. This disclaimer, which was not disclosed in the text as filed, has been introduced so that claims directed to a method could be added, which would not encompass exceptions to patentability as defined in Article 52(4) EPC.

### Brief description of the drawings

- Fig. 1: shows an overview of an externally mounted optical tracking device according to one embodiment of the invention,
- Fig. 2: shows a schematic view of the surface motion recorded by the sensor and the instrument's motion according to Fig. 1,
- Fig. 3: shows a schematic view of an instrument shaft made of a succession of colored segments, visible along the surface of an instrument,
- Fig. 4: shows a schematic view of transverse and helicoidal visual markers on the instrument that can be used to identify its orientation,
- Fig. 5: shows a schematic view of an example of the optical navigation sensor integrated to the instrument itself, measuring the motion of surrounding tube or environment,
- Fig. 6: shows examples of images captured by an optical navigation sensor used for motion-tracking,

### Detailed description of the invention

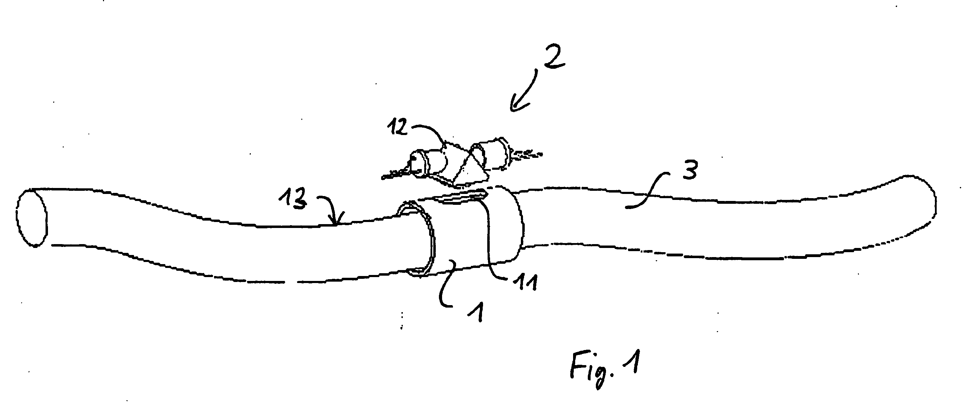

Fig. 1 shows a schematic view of an externally mounted optical tracking device according to one embodiment of the invention.

An instrument-holding device 1 contains an opening or transparent area 11 through which an optical navigation sensor 2 can track the underlying surface 13 of an inserted instrument 3. The holding device 1 can have various shapes. In particular, it can be similar to any existing instrument trocar used during medical procedures, some of which allow the insertion of instruments of varying diameters. The instrument-holding device 1 is preferably a hollow cylindrical element. It may be a short sleeve allowing the introduction of a flexible element or instrument 3 as shown in Fig. 1. The opening or transparent area 11 within the instrument-holding device 1 is at least as large as the maximum field of vision of the imaging optical navigation sensor 2; alternatively the whole holding device 1 could be transparent. The underlying surface 13 has a non-negligible curvature taken into consideration in providing the transparent area 11 and/or imaging elements (lens, prism etc.).

The instrument-holding device 1 is connected with a refractive optical element 12 of the optical navigation sensor 2 in such a way, that the instrument 3 is held at an adequate distance of the optical navigation sensor 2, so the surface 13 of the instrument 3 remains in focus for the image capture used for instrument tracking.

Although the invention is described in connection with the tracking of instruments 3 having a diameter of several millimeters, it can equally be used to track thinner, as well as flexible instruments, such as catheters.

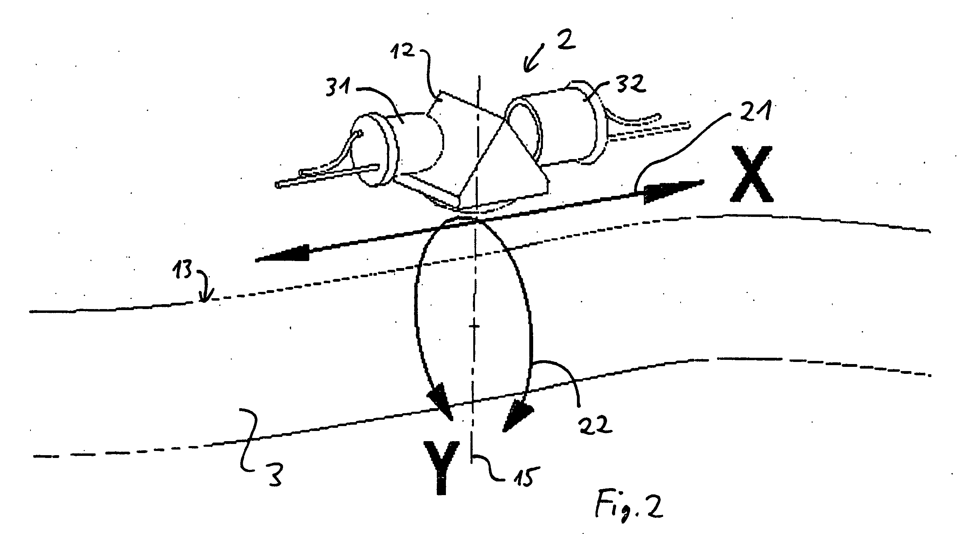

Fig. 2 shows the correspondence of the surface motion recorded by the sensor and the instrument's motion. The surface motion axes reported by the optical navigation sensor 2, labeled X and Y for the arrows 21 and 22, respectively measure the longitudinal translation and axial rotation of the instrument.

The optical navigation sensor 2 comprises a light source 31 and a light-detecting and image-capturing transducer 32. The light source 31 can be a LED or another appropriate light emitting element. The transducer 32 can be a suitable array of photo detectors or e.g. a CCD device. The optical navigation sensor 2 optically detects motion by directly imaging as an array of pixels the various particular optical features visible at surface 13. The light from the light source 31 reflected from the surface 13 is focused onto the transducer 32 inside the optical navigation sensor 2. The responses of the individual photo detectors or CCD device are digitized to a suitable resolution and stored as a frame into corresponding locations within an array of memory. The image-capturing transducer 32 can be embedded within a chip that also includes a processor that processes the successive frames and continuously measures their relative displacement.

The light source 31 and the light-detecting transducer 32 are mounted in the tracking device near the surface of the instrument. They may be mounted in the longitudinal direction 23 of the instrument as well as in a transverse direction. A refractive optical element 12 is mounted between the two elements 31 and 32, and the instrument surface 13. This optical element has the same function as in a PC mouse, which is: 1) to focus the image captured by the transducer 32 to a well-defined distance 2) to ensure that the light emitted by element 31 illuminates an area around the axis of symmetry 15 of the element 12. A portion of the reflected light then reenters lens 12 and is guided onto the light sensitive surface of transducer 32.

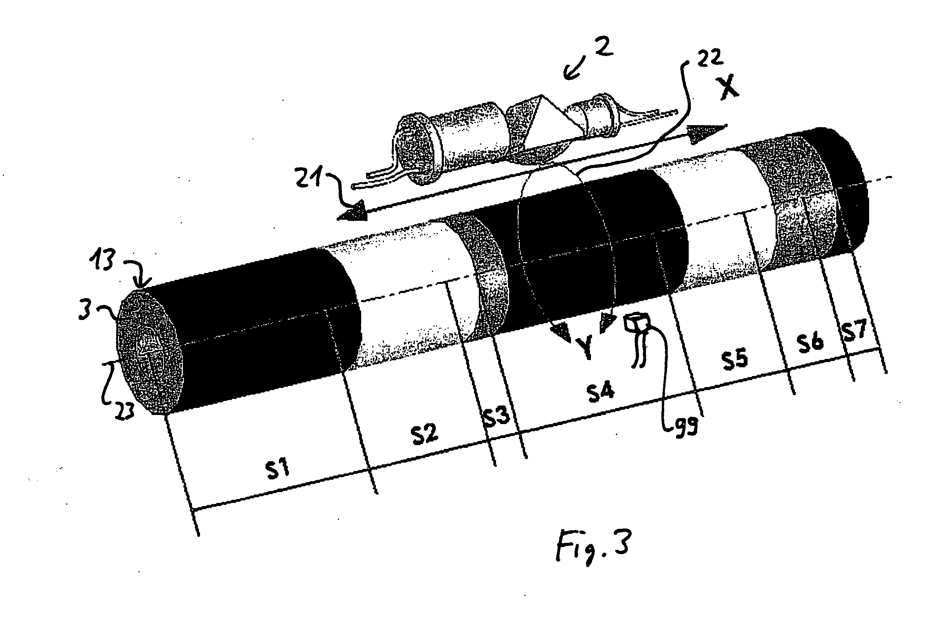

Fig. 3 shows a schematic view of an instrument 3 made of a succession of colored, shaded or differently textured segments that may also be painted or engraved. While measuring the motion of the instrument, the optical navigation sensor can be queried about the image it currently sees. These distinct areas can therefore be detected as they pass underneath the imaging optical navigation sensor 2, and the length of each segment can be measured during the longitudinal motion of the instrument (in the direction 21 labeled with an X axis). The resulting pattern of segment colors and lengths (black-S1, white-S2, grey-S3, black-S4, white-S5, grey-S6 and black-S7) can be used to encode information. This information can be used as a unique signature for each instrument, thus providing for automated instrument identification as it is inserted, or to identify a specific area along the length of the instrument.

Optionally, a simple high-resolution optical reflective sensor 99, such as the HEDS-1100 manufactured by Agilent Technologies, may be added to the device to measure the luminosity of a single point on the surface of the instrument with an increased accuracy. Such an optical reflective sensor is a fully integrated module containing a LED emitter and a matched IC photo detector in one single housing. A bifurcated aspheric lens is used to image the active areas of the emitter and the detector to one single spot.

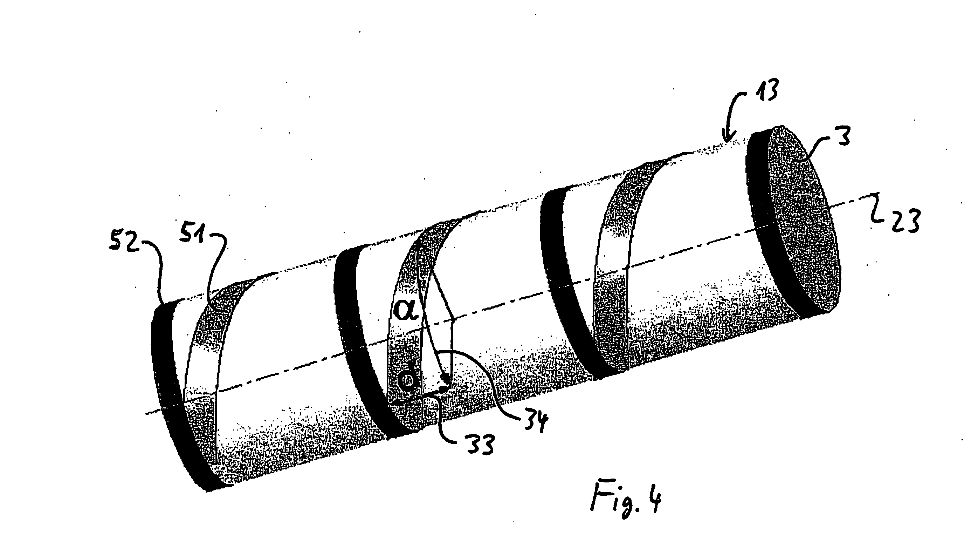

Fig. 4 shows a schematic view of transverse and helicoidal markers on the instrument that can be used to identify its orientation

One helicoidal marking line 51 goes along the length of the instrument 3. Several transversal marking lines 52 go along the instrument. In the embodiment shown in Fig. 4 all transversal lines have the same width, but the spacing of a certain number of consecutive lines may also be chosen unique (uniquely coded), allowing to establish the absolute position along the length of the instrument. Also, as presented in Fig. 4, a unique shade can be used to identify the helicoidal marking when it is encountered. But different approaches could be used.

Helicoidal marking 51 of the surface 13 are used to determine the rotational orientation 22 of the instrument 3 during its longitudinal motion under the optical navigation sensor 2.

The distance 33 between the detection of a transverse mark 52 (black in Fig. 4) and the following helicoidal mark 51 (gray in Fig. 4) is recorded (d). The axial rotation 34 of the instrument (α), relative to a reference point where the helicoidal 51 and transverse 52 markings cross each other, can be computed by simple proportionality: α = k x d - where k is 2 x PI divided by the longitudinal distance between two consecutive turns of the helix as provided by helicoidal marks 51. And α is the axial rotation angle of the instrument at the instant where the helicoidal marking is seen.

Other types of markers can be used in a similar fashion. The helicoidal shape of the gray marking 51 will be crossed during simple longitudinal motion 21 (i.e. along axis 23) of the instrument 3, even when the instrument 3 itself is not rotated.

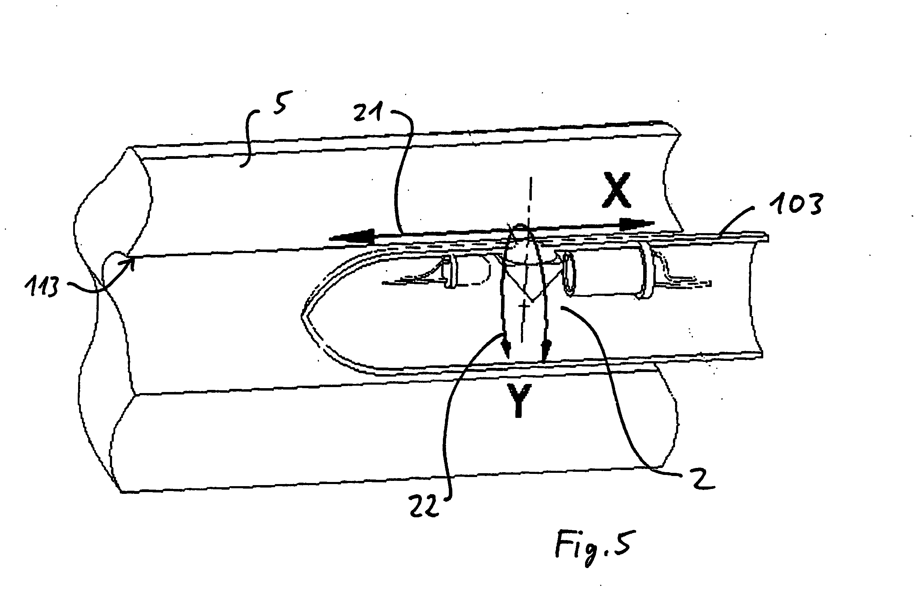

Fig. 5 shows a schematic view of an example of the optical navigation sensor 2 integrated to the instrument 103 itself, measuring the relative motion of surrounding tube or environment 5. Using the same techniques as depicted in the rest of this disclosure, this embodiment allows the instrument 103 itself to measure its longitudinal translation 21 (X) and axial rotation 22 (Y) relative to its environment 5, e.g. the internal surface 113 of a blood vessel.

In the embodiment shown in Fig. 1, the optical navigation sensor 2 is attached to the inner side of a ring-shaped or tubular tracking device. This element may be used independently, or as part of an instrument-insertion piece, such as a trocar used in minimally invasive surgical procedures. The tracking device may also be combined with a motorized device that controls the motion of the inserted instrument, or applies forces onto it.

The 2-D optical navigation sensor 2 with integrated image processing can be one of several existing devices, such as the ADNS-2001 or ADNS-2030 or ADNS-2051 manufactured by Agilent Technologies. This sensor based on the processing of a sequence of captured images is mounted behind refractive and lens system 12, which focuses an image-capture grid to a certain distance from the sensor itself. A light emitting diode 31 is located nearby to ensure adequate illumination of the surface underneath the sensor.

The surrounding piece ensures that the surface of an inserted instrument is kept in focus of the optical navigation sensor, while the instrument can freely be translated longitudinally and rotated around its axis. Two holding rings, a tube 1, or any system able to accommodate multiple instrument diameters can be used.

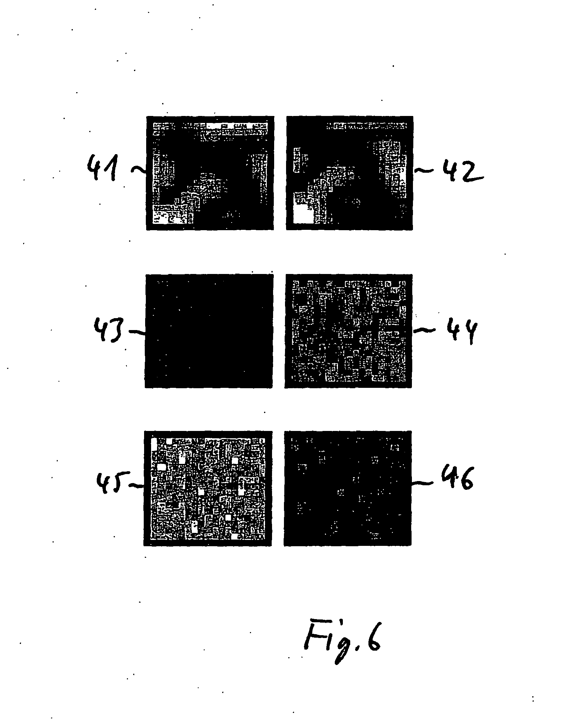

Fig. 6 shows examples of images captured by an optical navigation sensor for surface motion tracking. The information that can be extracted from such an image-based surface tracking optical navigation sensor 2 is obtained and processed as follows:

Images 41 and 42 show two consecutive images captured by an imaging sensor 2 used for surface tracking. A comparison of the initial image 41 (left) and the subsequent one 42 (right) allows detection of the amount and direction of image motion.

Images 43 and 44 show the difference that may typically be found between an image where no instrument is present in the tracking device 43 (left), and after an instrument as been inserted 44 (right). The contrast between areas of the image increases in a way that can be detected. The luminosity also typically increases.

Images 45 and 46 show two images captured by an image-based motion-tracking device, depending on whether the underlying tracked surface has a light or dark color as used with surfaces according to Fig. 3 and 4. However, the optical navigation sensor may seek to maintain an average, optimal illumination of the captured image by adjusting its exposure time, a.k.a. shutter time.

The surface translation information is computed by the integrated motion-tracking processor, which extracts and reports translation information along two orthogonal axes in image-space. Looking at the sample images in Fig. 6, these can be interpreted as a vertical and horizontal displacement of the image. When the sensor is integrated in a device such as those described in this invention (Fig. 1, 2, and 6), this motion information can be translated into the longitudinal and rotational motion of the instrument 3.

The surface displacement is separated into a longitudinal component (=x), parallel to the central axis of the ring-shaped sensor, and a transverse component (=y) perpendicular to the previous axis. The longitudinal component directly measures the longitudinal motion of the instrument through the tracking device. The transverse displacement of the instrument's surface is translated into a measure of the instrument's rotation relative to the tracking device, by dividing it the radius of the instrument.

Motion along the two degrees of motion freedom of any inserted instrument can be measured with a good accuracy. Slippage problems comparable to those found in friction-based motion tracking mechanisms occur only at high speeds which are not encountered during normal use of medical instruments and the cumulated error is also minimal compared to these previous approaches. Also, as no direct contact is required, the friction that opposes the free motion of the instrument by the user is significantly reduced.

In addition to the instrument motion, other properties of the image captured by the sensor can be used to detect the presence or absence of the instrument, and to detect optical markers on the surface of the instrument.

In an embodiment of this invention, two properties of the image captured by the optical navigation sensor are used: 1. The average intensity of the light diffusely reflected by the surface, a.k.a. the brightness of the image (B). 2. The variability of the luminosity on different areas of the captured image, which is somewhat related to the contrast of the image (C). On a device such as the ADNS-2030, the contrast information (C) is available as a surface quality measurement (SQUAL register), and the overall image brightness (B) can be extrapolated by dividing the average pixel value by the shutter time (Average_Pixel / Shutter_Lower or Shutter_Upper).

When no instrument is inserted in the tracking device, the image captured by the optical navigation sensor will be out of focus and therefore blurred, and light emitted by the LED will not be reflected towards the optical navigation sensor. The image will therefore be dark and blurry (Fig. 6, reference numeral 43), which is measured as a drop of the values (B) and (C) described above. This signals the absence of any instrument. When an instrument is inserted, the imaging sensor reports an increase in the values of (C) and (B), the crispness the brightness of the image (Fig. 6, reference numeral 44). Again, these parameters decrease when the instrument is withdrawn. Therefore, the device described in this invention can detect and report the insertion or withdrawal of an instrument to an external system, such as a computer. Additionally, as the instrument entry is detected, the exact longitudinal position of the instrument tip can be recorded at each insertion of the instrument. Using subsequent measurements of the instrument's longitudinal motion, the absolute position of the instrument's tip can be tracked.

Light and dark segments of the instrument shaft can also be detected as they appear under the optical navigation sensor, as the intensity of the luminosity signal (B) will increase when a light-colored segment is encountered, and decreased when a dark segment is encountered. By combining position and brightness information, the width and the shade of each segment of the instrument can be measured. This information can be used to uniquely identify an instrument that has been inserted, or to detect the absolute longitudinal position of the instrument under the sensor (Fig. 3).

Instead of, or in addition to colored segments, spiral-shaped areas of changing shades or colors may also be printed, engraved, or otherwise embedded on the surface of the instrument. Knowing the position of an oblique strip of a specific shape, and the current insertion depth of the strip, the absolute rotation angle of the instrument within the tracking device can be determined (Fig. 4).

Alternatively, in all the previous descriptions that involve the use of a Brightness signal (B) retrieved from the optical navigation sensor, a separate optical navigation sensor may be used to measure brightness with increased accuracy. This brightness signal can be combined with the motion information in the same fashion as described above.

In a different embodiment of this invention, the optical navigation sensor is mounted within the instrument itself. The tracking may be performed through a transparent surface material of the instrument, so that no moving part or measuring system needs to be exposed. Using the same techniques described above, the instrument can track the presence and motion of a tube, a guiding piece, or any soft tissue or material surrounding it (Fig. 5). Both the longitudinal and rotational displacements of the instrument 103 can be measured as described above. The insertion and withdrawal of the instrument 103 can be identified - e.g. by a sharp increase of the values of (B) and (C) as instrument segment that contains the optical navigation sensor is inserted into a surrounding tissue. From this reference position, it is the insertion depth of instrument 103 that can be tracked. When the instrument 103 is inserted in a dedicated element 5 that contains known segments of varying surface properties, as described in Fig. 3 and 4, image luminosity and contrast/quality information can also be used as above to establish the exact position of the instrument 103 and identify where has been inserted.

In this embodiment, the invention can be applied to instruments that are inserted in pre-existing cavities (tubes, pipes, blood vessels), or instruments that pierce through soft tissue structures.

The device according to the figures shows the application of the optical tracking to the analysis of an instrument's motion through a surrounding static element as used for medical simulation, but the same device can be used within the operating field to track instruments used by the surgeon (computer assisted surgery applications), or in other environments.

The key benefits are:
- Contact- and friction-free tracking of the instrument's motion with two degrees of freedom (translation and rotation).
- In a system providing force-feedback, the optical measurement is independent from the force effectors (e.g. friction wheel) and is not subject to slippage (uncoupling of the motion of the wheel and instrument)
- Existing optical navigation sensors also provide information on the quality of the image acquired for tracking (e.g. blurriness when the image is out of focus), and luminosity of the image. This allows to detect the presence of the instrument within the guiding device - as the sensor does not see any object in focus when no instrument is inserted. In particular, it allows to detect when the tip of the instrument passes in front of the sensor, providing information on the absolute position of the instrument as it is inserted. The luminosity information can also be used to detect markings on the instrument surface, allowing the recording of an absolute position.

Or, if the optical navigation sensor is located on the moving instrument, detect when that instrument is inserted within another structure.

The information transmitted by a motion sensor (optical or other) tracking the instrument is combined with the signal coming from the optical sensors. The width or spacing between markers that are detected by the sensors, or the consecutive width/spacing of multiple sensor can be unique along an instrument, allowing to define the absolute position of the instrument relative to the surrounding piece. The pattern may also be unique for an instrument. This allows the system to identify an instrument that was inserted based on its unique pattern.

The position of the instrument as measured by motion detectors (optical, mechanical, or other) can be re-calibrated based on the absolute position defined by the pattern detection. A progressive correction, by amplifying or scaling down subsequent instrument motions, can be applied to progressively correct the reported instrument position.

In another embodiment not shown in the drawings, two LED's are mounted on different sides of the instrument 3 one opposite to the other. If both of the opposed LEDs see a dark line simultaneously, it is known that a transversal marking line was encountered. The longitudinal position of this marking line relative to previously encountered transversal marking lines is recorded. By uniquely coding the spacing of consecutive lines, the absolute position along the instrument shaft can be reported. When only one LED sees a marker, it is known that the helicoidal marker has been encountered. Based on the current known longitudinal position, the rotation of the instrument can be computed reliably (to compensate for slippage along the rotational measurement).

The two light sources can also be mounted at different locations of the device (not necessarily opposite one to another and not in the same longitudinal position). Then two corresponding light detectors produce two position signals showing each a locally varying distribution in the longitudinal direction and in the peripheral direction to enable said precise position and angular measurement correlating the signals of the two positions.

The advantages of the devices according to the invention are especially:
- Use of optical navigation sensor to track the longitudinal and rotational motion of a rotationally symmetrical instrument. Sensor is located on surrounding piece, which maintains the instrument at an appropriate focal distance, or on instrument itself. The instrument may be rigid or flexible.
- Use of an imaging motion sensor as part of a longitudinal instrument, to measure its motion relative to its surroundings.
- Use of the image quality/contrast information to detect the presence of the instrument within the tracking device, or the insertion of the instrument within a surrounding structure. Use of the detection of the instrument's insertion to establish the absolute position of the instrument's tip.
- Use of luminosity information, from the motion sensor itself, or from a separate single-point optical sensor, to detect segments or oblique areas on the surface of the instrument. Use of this information, correlated with the current instrument position, to identify the instrument, or to establish the current rotational position of the instrument.

## Claims

1. Device for determining relative longitudinal and rotational motions between a rotationally symmetrical instrument and a longitudinal element in which the former is intended to be guided during a surgical simulation or real operation, comprising
an optical navigation sensor (2) including at least one light source (31) and at least one light detector (32), and arranged for capturing successive images of a surface (13, 113) of either of said instrument and said element with respect to a predefined position of the other,
wherein it further comprises a motion-tracking processor arranged to report relative longitudinal and rotational motion information between said instrument and said element, on the basis of a comparison carried out between a first (41, 43, 45) of said captured images and a subsequent (42, 44, 46) of said captured images, and
wherein said optical navigation sensor (2) further comprises an imaging element (12) to focus said emitted light onto said surface (13), said motion-tracking processor being further arranged to detect and report an insertion or a withdrawal of said rotationally symmetrical instrument (3) within said longitudinal element (1) on the basis of said comparison.

2. Device according to claim 1, wherein said optical navigation sensor is arranged so that the light emitted by said light source (31) is directed onto an outer surface (13) of said rotationally symmetrical instrument (3) or onto an inner surface (113) of said longitudinal element (1), and so that at least part of the light reflected by said surface is detected by said light detector (32) to produce a position signal representative of a local surface distribution and corresponding to one of said captured images used for the purpose of carrying out said comparison.

3. Device according to claim 1 or 2, wherein said motion-tracking processor is further arranged to report an indication of the absolute position of said rotationally symmetrical instrument (3) within said longitudinal element (1) on the basis of both said relative longitudinal and rotational motion information and an insertion detection.

4. Device according to any of claims 1 to 3, wherein said light source (31) and said light detector (32) are incorporated inside said rotationally symmetrical instrument (103), said longitudinal element (1) being a tube, a needle or a vessel.

5. Device according to any of claims 1 to 4, wherein said surface (13) further comprises position markers (51) providing different reflectivity and smoothness/granularity/texture properties such that an identification of the nature of said rotationally symmetrical instrument can be implemented in connection with said relative longitudinal and rotational motion information.

6. Device according to claim 5, wherein said position markers comprise a pattern from the group of oblique, longitudinal and transversal lines, helicoidal lines and combinations thereof.

7. Device according to any of claims 5 and 6, wherein said position markers have different width and/or color and/or reflectivity and/or texture.

8. Device according to any of claims 5 to 7, wherein said position markers are designed in such a way as to allow a determination of an absolute position of said rotationally symmetrical instrument (3) within said longitudinal element (1) on the basis of said captured images.

9. Device according to any of the preceding claims, wherein it comprises at least one single-point optical sensor to measure the luminosity of a single point on said surface.

10. Device according to any of the preceding claims, wherein it comprises two light sources (31) located in two different predefined positions and two corresponding light detectors (32) designed to produce two sets of captured images (41 to 46), each corresponding to a local surface distribution, said motion-tracking processor being arranged to report relative longitudinal (21) and rotational (22) motion information between said instrument (3) and said element (1), on the basis of a comparison implemented in connection with each set of said captured images, by comparison of a first (41, 43, 45) of said captured images with a subsequent (42, 44, 46) of said captured images of the same set.

11. Method for determining relative longitudinal (21) and rotational (22) motions between a rotationally symmetrical instrument (3, 103) and a longitudinal element (1) in which the former is guided during a surgical simulation, said surgical simulation being not carried out on any part of a human body, by implementation of a device comprising an optical navigation sensor (2) including at least one light source (31) and at least one light detector (32) for capturing successive images of a surface (13, 113) of either of said instrument and said element with respect to a predefined position of the other, as well as an imaging element (12) to focus said emitted light onto said surface (13), said device comprising a motion-tracking processor arranged to report relative longitudinal and rotational motion information between said instrument and said element, in a comparing step, by comparing a first (41, 43, 45) of said captured images with a subsequent (42, 44, 46) of said captured images, said motion-tracking processor being further arranged to detect and report an insertion or a withdrawal of said rotationally symmetrical instrument (3) within said longitudinal element (1) on the basis of said comparing step.

12. Method according to claim 11, wherein said implementation of said device further comprises a step of reporting an indication of the absolute position of said rotationally symmetrical instrument (3) within said longitudinal element (1) on the basis of both said relative longitudinal and rotational motion information and an insertion detection.

13. Method according to claim 11 or 12, wherein said rotationally symmetrical instrument (3) is a surgical instrument, said longitudinal element (1) being a trocar.

## Patentansprüche

1. Vorrichtung zum Bestimmen von relativen Längs-und Drehbewegungen zwischen einem rotationssymmetrischen Instrument und einem Längselement, in welchem das Erstere während einer chirurgischen Simulation oder einer tatsächlichen Operation geführt werden soll, umfassend
einen optischen Navigationssensor (2), der zumindest eine Lichtquelle (31) und zumindest einen Lichtdetektor (32) beinhaltet, und der zum Erfassen aufeinander folgender Bilder einer Oberfläche (13, 113) sowohl vom besagten Instrument als auch vom besagten Element in Bezug auf eine vordefinierte Position des jeweils anderen angeordnet ist,
wobei sie des Weiteren einen Bewegungsmessungsprozessor umfasst, der angeordnet ist, um eine relative Längs- und Drehbewegungsinformation zwischen dem besagten Instrument und dem besagten Element auf Basis eines Vergleichs zu melden, der zwischen einem ersten (41, 43, 45) der besagten erfassten Bilder und einem nachfolgenden (42, 44, 46) der besagten erfassten Bilder durchgeführt wird, und
wobei der besagte optische Navigationssensor (2) des Weiteren ein bildgebendes Element (12) umfasst, um das besagte emittierte Licht auf die besagte Oberfläche (13) zu fokussieren, wobei der besagte Bewegungsmessungsprozessor des Weiteren angeordnet ist, um eine Einführung oder eine Entnahme des besagten rotationssymmetrischen Instruments (3) innerhalb des besagten Längselements (1) auf Basis des besagten Vergleichs festzustellen und zu melden.

2. Vorrichtung nach Anspruch 1, wobei der besagte optische Navigationssensor so angeordnet ist, dass das von der besagten Lichtquelle (31) emittierte Licht auf eine äußere Oberfläche (13) des besagten rotationssymmetrischen Instruments (3) oder auf eine innere Oberfläche (113) des besagten Längselements (1) gelenkt wird, und dass zumindest ein Teil des von der Oberfläche reflektierten Lichtes vom besagten Lichtdetektor (32) erfasst wird, um ein Positionssignal zu erzeugen, das für eine lokale Oberflächenverteilung kennzeichnend ist und zumindest einem der besagten erfassten Bilder entspricht, die zwecks Durchführung des besagten Vergleichs verwendet werden.

3. Vorrichtung nach Anspruch 1 oder 2, wobei der besagte Bewegungsmessungsprozessor des Weiteren angeordnet ist, um eine Anzeige der Absolutposition des besagten rotationssymmetrischen Instruments (3) innerhalb des besagten Längselements (1) auf Basis von sowohl der besagten relativen Längs- und Drehbewegungsinformation als auch einer Einführungsmeldung zu melden.

4. Vorrichtung nach einem der Ansprüche 1 bis 3, wobei die besagte Lichtquelle (31) und der besagte Lichtdetektor (32) im Inneren des besagten rotationssymmetrischen Instruments (103) eingebaut sind, wobei das besagte Längselement (1) eine Sonde, eine Nadel oder ein Gefäß ist.

5. Vorrichtung nach einem der Ansprüche 1 bis 4, wobei die besagte Oberfläche (13) des Weiteren Positionsmarkierungen (51) umfasst, die über unterschiedliche Reflexions- und Glätte-/Granularitäts-/Textureigenschaften verfügen, so dass eine Identifizierung der Art des besagten rotationssymmetrischen Instruments in Verbindung mit der besagten relativen Längs- und Drehbewegungsinformation durchgeführt werden kann.

6. Vorrichtung nach Anspruch 5, wobei die besagten Positionsmarkierungen ein Muster aus der Gruppe schiefer, länglicher und quer verlaufender Linien, schraubenartiger Linien und Kombinationen davon aufweisen.

7. Vorrichtung nach einem der Ansprüche 5 und 6, wobei die besagten Positionsmarkierungen eine unterschiedliche Breite und/oder Farbe und/oder Reflexionsvermögen und/oder Textur haben.

8. Vorrichtung nach einem der Ansprüche 5 bis 7, wobei die besagten Positionsmarkierungen derart ausgeführt sind, dass sie eine Bestimmung einer Absolutposition des besagten rotationssymmetrischen Instruments (3) innerhalb des besagten Längselements (1) auf Basis der besagten erfassten Bilder ermöglichen.

9. Vorrichtung nach einem der vorhergehenden Ansprüche, wobei sie zumindest einen optischen Ein-Punkt-Sensor umfasst, um die Helligkeit eines einzigen Punktes auf der besagten Oberfläche zu messen.

10. Vorrichtung nach einem der vorhergehenden Ansprüche, wobei sie zwei Lichtquellen (31), die sich an zwei unterschiedlichen, vordefinierten Positionen befinden, und zwei entsprechende Lichtdetektoren (32) umfasst, die ausgeführt sind, um zwei Sets aus erfassten Bildern (41 bis 46) zu erzeugen, von denen jedes einer lokalen Oberflächenverteilung entspricht, wobei der besagte Bewegungsmessungsprozessor angeordnet ist, um eine relative Längs- (21) und Drehbewegungsinformation (22) zwischen dem besagten Instrument (3) und dem besagten Element (1) auf Basis eines in Verbindung mit jedem Set aus den besagten erfassten Bildern durchgeführten Vergleichs zu melden, und zwar durch den Vergleich zwischen einem ersten (41, 43, 45) der besagten erfassten Bilder und einem nachfolgenden (42, 44, 46) der besagten erfassten Bilder des gleichen Sets.

11. Methode zum Bestimmen von relativen Längs- (21) und Drehbewegungen (22) zwischen einem rotationssymmetrischen Instrument (3, 103) und einem Längselement (1), in welchem das Erstere während einer chirurgischen Simulation geführt wird, wobei die besagte chirurgische Simulation an keinem Teil des menschlichen Körpers durchgeführt wird, und zwar durch Implementierung einer Vorrichtung, die einen optischen Navigationssensor (2) umfasst, der zumindest eine Lichtquelle (31) und zumindest einen Lichtdetektor (32) zum Erfassen aufeinander folgender Bilder einer Oberfläche (13, 113) sowohl vom besagten Instrument als auch vom besagten Element in Bezug auf eine vordefinierte Position des jeweils anderen beinhaltet, ebenso wie ein bildgebendes Element (12), um das besagte emittierte Licht auf die besagte Oberfläche (13) zu fokussieren, wobei die besagte Vorrichtung einen Bewegungsmessungsprozessor umfasst, der angeordnet ist, um eine relative Längs- und Drehbewegungsinformation zwischen dem besagten Instrument und dem besagten Element in einem Vergleichsschritt zu melden, und zwar durch Vergleichen eines ersten (41, 43, 45) der besagten erfassten Bilder mit einem nachfolgenden (42, 44, 46) der besagten erfassten Bilder, wobei der besagte Bewegungsmessungsprozessor des Weiteren angeordnet ist, um eine Einführung oder eine Entnahme des besagten rotationssymmetrischen Instruments (3) innerhalb des besagten Längselements (1) auf Basis des besagten Vergleichsschrittes festzustellen und zu melden.

12. Methode nach Anspruch 11, wobei die besagte Implementierung der besagten Vorrichtung des Weiteren einen Schritt des Meldens einer Anzeige der Absolutposition des besagten rotationssymmetrischen Instruments (3) innerhalb des besagten Längselements (1) auf Basis von sowohl der besagten relativen Längs- und Drehbewegungsinformation als auch einer Einführungsmeldung umfasst.

13. Methode nach Anspruch 11 oder 12, wobei das besagte rotationssymmetrische Instrument (3) ein chirurgisches Instrument ist, und wobei das besagte Längselement (1) ein Trokar ist.

## Revendications

1. Dispositif destiné à déterminer des mouvements longitudinaux et rotatifs relatifs entre un instrument à symétrie de rotation et un élément longitudinal, dans lequel le premier est destiné à être guidé pendant une simulation chirurgicale ou une opération de chirurgie réelle, comprenant
un capteur de navigation optique (2) comprenant au moins une source lumineuse (31) et au moins un détecteur de lumière (32), et agencé pour capturer des images successives d'une surface (13, 113) dudit instrument ou dudit élément par rapport à une position prédéfinie de l'autre,
**caractérisé en ce qu'**il comprend également un processeur de suivi de mouvement agencé pour rapporter des informations de mouvement longitudinal et de rotation relatif entre ledit instrument et ledit élément, sur la base d'une comparaison réalisée entre une première (41, 43, 45) desdites images capturées et une image capturée ultérieurement(42, 44, 46), et
**caractérisé en ce que** ledit capteur de navigation optique (2) comprend également un élément de formation d'image (12) pour focaliser ladite lumière émise sur ladite surface (13), ledit processeur de suivi de mouvement étant également agencé pour détecter et rapporter une insertion ou un retrait dudit instrument à symétrie de rotation (3) à l'intérieur dudit élément longitudinal (1) sur la base de ladite comparaison.

2. Dispositif selon la revendication 1, **caractérisé en ce que** ledit capteur de navigation optique est agencé de telle sorte que la lumière émise par ladite source lumineuse (31) est dirigée sur une surface extérieure (13) dudit instrument à symétrie de rotation (3) ou sur une surface intérieure (113) dudit élément longitudinal (1), et de telle sorte qu'au moins une partie de la lumière réfléchie par ladite surface est détectée par ledit détecteur de lumière (32) pour produire un signal de position représentatif d'une distribution surfacique locale et correspondant à l'une desdites images capturées utilisée afin de réaliser ladite comparaison.

3. Dispositif selon la revendication 1 ou 2, **caractérisé en ce que** ledit processeur de suivi de mouvement est également agencé pour rapporter une indication de la position absolue dudit instrument à symétrie de rotation (3) à l'intérieur dudit élément longitudinal (1) sur la base desdites informations de mouvement longitudinal et de rotation relatif et d'une détection d'insertion.

4. Dispositif selon l'une quelconque des revendications 1 à 3, **caractérisé en ce que** ladite source lumineuse (31) et ledit détecteur de lumière (32) sont incorporés à l'intérieur dudit instrument à symétrie de rotation (103), ledit élément longitudinal (1) étant un tube, une aiguille ou un vaisseau.

5. Dispositif selon l'une quelconque des revendications 1 à 4, **caractérisé en ce que** ladite surface (13) comprend également des marques de position (51) offrant des propriétés différentes de réflectivité et régularité/granularité/texture de telle sorte qu'une identification de la nature dudit instrument à symétrie de rotation puisse être mise en oeuvre en liaison avec lesdites informations de mouvement longitudinal et de rotation relatif.

6. Dispositif selon la revendication 5, **caractérisé en ce que** lesdites marques de position présentent une forme prise parmi le groupe de lignes obliques, longitudinales et transversales, lignes hélicoïdales et combinaisons de celles-ci.

7. Dispositif selon l'une quelconque des revendications 5 et 6, **caractérisé en ce que** lesdites marques de position ont des largeurs et/ou des couleurs et/ou des réflectivités et/ou des textures différentes.

8. Dispositif selon l'une quelconque des revendications 5 à 7, **caractérisé en ce que** lesdites marques de position sont conçues de façon à permettre une détermination d'une position absolue dudit instrument à symétrie de rotation (3) à l'intérieur dudit élément longitudinal (1) sur la base desdites images capturées.

9. Dispositif selon l'une quelconque des revendications précédentes, **caractérisé en ce qu'**il comprend au moins un capteur optique à focalisation ponctuelle pour mesurer la luminosité d'un seul point sur ladite surface.

10. Dispositif selon l'une quelconque des revendications précédentes, **caractérisé en ce qu'**il comprend deux sources lumineuses (31) situées dans deux positions différentes prédéfinies et deux détecteurs de lumière (32) correspondants conçus pour produire deux séries d'images capturées (41 à 46), correspondant chacune à une distribution surfacique locale, ledit processeur de suivi de mouvement étant agencé pour rapporter des informations de mouvement longitudinal (21) et de rotation (22) relatif entre ledit instrument (3) et ledit élément (1), sur la base d'une comparaison mise en oeuvre en liaison avec chaque série desdites images capturées, par comparaison d'une première (41, 43, 45) desdites images capturées et d'une image capturée ultérieurement (42, 44, 46), de la même série.

11. Procédé destiné à déterminer les mouvements longitudinaux (21) et de rotation (22) relatifs entre un instrument à symétrie de rotation (3, 103) et un élément longitudinal (1) dans lequel le premier est guidé pendant une simulation chirurgicale, ladite simulation chirurgicale n'étant pas réalisée sur une partie d'un corps humain, en mettant en oeuvre un dispositif comprenant un capteur de navigation optique (2) comprenant au moins une source lumineuse (31) et au moins un détecteur de lumière (32) pour capturer des images successives d'une surface (13, 113) dudit instrument ou dudit élément par rapport à une position prédéfinie de l'autre, ainsi qu'un élément de formation d'image (12) pour focaliser ladite lumière émise sur ladite surface (13), ledit dispositif comprenant un processeur de suivi de mouvement agencé pour rapporter des informations de mouvement longitudinal et de rotation relatif entre ledit instrument et ledit élément, dans une étape de comparaison, en comparant une première (41, 43, 45) desdites images capturées avec une image capturée ultérieurement (42, 44, 46), ledit processeur de suivi de mouvement étant également agencé pour détecter et rapporter une insertion ou un retrait dudit instrument à symétrie de rotation (3) à l'intérieur dudit élément longitudinal (1) sur la base de ladite étape de comparaison.

12. Procédé selon la revendication 11, **caractérisé en ce que** ladite mise en oeuvre dudit dispositif comprend également une étape de rapport d'une indication de la position absolue dudit instrument à symétrie de rotation (3) à l'intérieur dudit élément longitudinal (1) sur la base desdites informations de mouvement longitudinal et de rotation relatif et d'une détection d'insertion.

13. Procédé selon la revendication 11 ou 12, **caractérisé en ce que** ledit instrument à symétrie de rotation (3) est un instrument chirurgical, ledit élément longitudinal (1) étant un trocart.
